# EUROPEAN PATENT SPECIFICATION

(11) **EP 3 235 692 B1**
(45) Date of publication and mention of the grant of the patent: **30.01.2019**
(21) Application number: 16166362.0
(22) Date of filing: 21.04.2016
(51) Int. Cl.: B60R 21/239

(54) **DRIVER AIRBAG AND STEERING WHEEL UNIT**
FAHRERAIRBAG UND LENKRADEINHEIT
AIRBAG CONDUCTEUR ET UNITÉ DE VOLANT DE DIRECTION

(43) Date of publication of application: 25.10.2017
(73) Proprietor: Autoliv Development AB, 447 83 Vårgårda (SE)
(72) Inventor: Jahme, Bernhard, D-86391 Stadtbergen (DE)
(74) Representative: Schön, Thilo

(56) References cited:
- EP-A1- 2 703 234
- JP-A- 2006 182 329

## Description

The invention relates to a steering wheel unit comprising a steering wheel and a driver airbag according to claim 1.

A so called driver airbag is a part of the standard safety equipment of almost every modern passenger car. Such a driver airbag is folded into a housing being located in the hub area of the steering wheel and inflates by means of an inflator in case of a frontal accident or a laterally offset frontal accident. A completely deployed driver airbag usually covers the whole steering wheel including its rim. The driver airbag comprises a front layer pointing towards the driver and a back layer pointing towards the steering wheel. These two layers define the outer skin of the airbag which encloses a chamber. Most often front layer and back layer are made of separate panels which are connected to each other by means of an edge seam or another edge connection.

Every driver airbag comprises a ventilation device having at least one ventilation hole. It is further known in the art to provide at least one adaptive ventilation device whose behaviour (strong venting, weak venting, or no venting) depends on external factors like the weight of the driver, the severity of the accident etc. The use of such am adaptive ventilation device helps to protect the drive in an optimal way.

Often the front layer and the back layer are connected to each other by means of a central tether in order to shape the front layer, especially in such a way that a central portion of the airbag has a reduced depth in relation to lateral portions. By this it is especially achieved that load applied to the head and/or thorax of the driver is not too high and the shoulders carry a substantial portion of the load.

For example from WO 2012 / 001058 A1 or JP 2008-49834 A it is further known to reduce the load applied to the upper abdominal region of the occupant by giving the lower edge of the outer skin of the airbag (being comprised of the front layer and the back layer) the shape of an upside down U such that the length of the lower part of the airbag is reduced in the middle. By doing to, more load is applied to the lower ribs and the upper abdominal region is relived.

JP 2006-182329 A discloses a steering wheel unit with an airbag according to the preamble of claim 1.

It is the object of this invention to provide an alternative shape of a driver airbag which applies only small forces to the upper abdominal region of the driver and which provides additional possibilities of adaptivity.

This task is solved by a steering wheel unit with the features of claim 1.
According to the invention, a line-shaped inner connection - usually in form of an inner seam - connecting the front layer and the back layer in a lower area of the driver airbag is provided. This inner connection encircles at least partially a sub-chamber of the chamber, such that the chamber comprises a main chamber and this sub-chamber. The back layer has at least one ventilation hole connecting the sub-chamber with the environment.

By providing an inner connection and a sub-chamber as defined above, one gets depth reduction of the driver airbag in the area allocated to the upper abdominal region of the driver and an adaptive ventilation device with very simple means. The adaptivity can be progressive or degressive.

According to the invention, the inner connection is spaced from the edge connection, such that the sub-chamber is completely surrounded by the main chamber, meaning the sub-chamber is like an "island" in the main chamber.

According to the invention, the inner connection has at least a first open end and a second open end, such that the sub-chamber is connected to the main chamber
via an overflow opening extending between the first open end and the second open end of the inner connection. As long as the at least one ventilation opening of the sub-chamber is not blocked from the outside, gas can stream from the main chamber through the overflow opening into the sub-chamber and from there out of the ventilation opening. Preferably the ventilation opening is at the six o'clock-position of the deployed airbag (meaning near the lower end of the airbag and in the centre regarding the left-right-direction). It is further preferred that in the fully deployed state of the airbag the ventilation hole is placed in front of the rim of the steering wheel such that it is pressed onto the rim if a force is applied to the front layer near the sub-chamber such that the ventilation through this ventilation hole is throttled or blocked in this case. This leads to a degressive ventilation characteristic.

Especially in that case it is preferred that the sub-chamber is oblong-shaped with the long axis extending in a horizontal direction when the driver airbag is mounted and deployed. By this a relatively large area of the rim can be used.

In an embodiment the inner connection is a tear connection at least in sections, especially such that the inner connection tears when the pressure inside the main chamber exceeds a pre-defined value, while the edge connection remains intact. When the inner connection tears, gas can flow freely from the main chamber to the at least one ventilation hole, such that a progressive ventilation characteristic is achieved. In this case it is preferred that the inner connection is a closed line, such that the sub-chamber is without connection to the main chamber as long as the inner connection is intact so that no ventilation through the ventilation hole takes place. The tearing of the inner connection can additionally have an reliving effect on the edge connection.

Usually it is necessary to further shape the driver airbag by means of at least one central tether connecting the front layer and the back layer. In order to maintain the "island character" of the sub-chamber, it is preferred that an area of the main chamber extends between the central tether and the inner connection.

The invention is now described in view of preferred embodiments in view of the figures. The figures show:
- Figure 1: a steering wheel unit in a schematic top view,
- Figure 2: the steering wheel unit of Figure 1 in a sectional view along plane A-A in Figure 1,
- Figure 3: the steering wheel unit of Figure 1 in a state in which the driver airbag initially located in the hub area of the steering wheel is fully deployed,
- Figure 4: the driver airbag of Figure 1 without the steering wheel,
- Figure 5: the sub-chamber of the driver airbag of Figure 4 in an enlarged view,
- Figure 6: an alternative embodiment of the sub-chamber in a representation according to Figure 5,
- Figure 7: the airbag unit of Figure 3 in a sectional view taken along plane B-B in Figure 3,
- Figure 8: the detail D1 of Figure 7,
- Figure 9: what is shown in Figure 8 when a force is applied to or near the centre of the lower area of the front layer of the driver airbag,
- Figure 10: a second embodiment of the invention in a representation according to Figure 3,
- Figure 11: the sub-chamber of the driver airbag of Figure 10 in an enlarged representation,
- Figure 12: a sectional view taken along the plane C-C in Figure 10,
- Figure 13: the detail D2 of Figure 12 and
- Figure 14: what is shown in Figure 13 after the pressure inside the main chamber exceeded a pre-defined value.

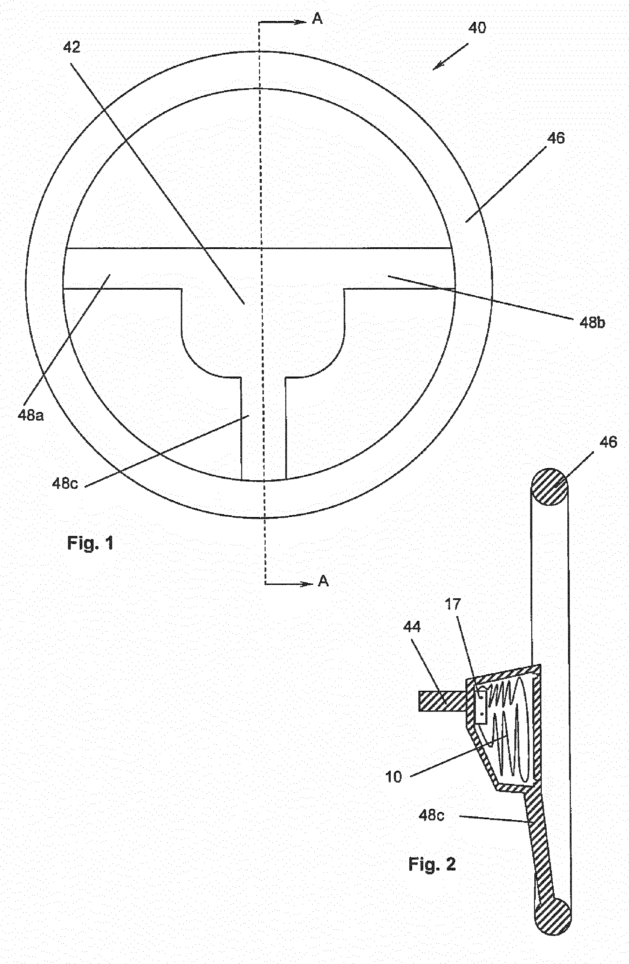

Figure 1 shows a steering wheel unit. This steering wheel unit is comprised of a steering wheel 40 and a driver airbag 10 located in the hub area 42 of this steering wheel 40. Since in the state shown in Figure 1 the driver airbag 10 is in its un-deployed resting state, only the steering wheel 40 can be seen. This steering wheel 40 has the already mentioned hub area 42, three spokes 48a, 48b, 48c and a rim 46.

Figure 2 shows a sectional view taken along plane A-A in Figure 2. One can see the driver airbag 10 folded into a housing located in the hub area 42 of the steering wheel 40 and the gas generator 17 for inflating this driver airbag 10. The steering column 44 is also shown in Figure 2.

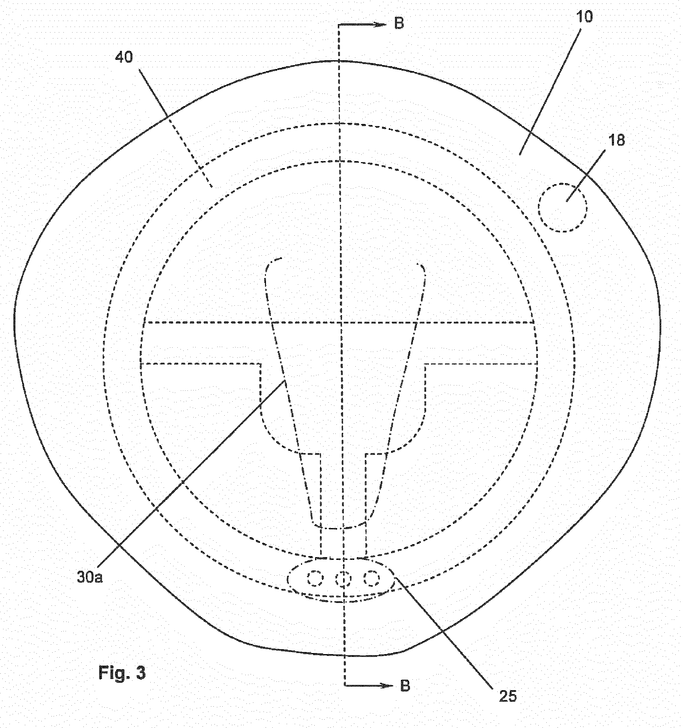

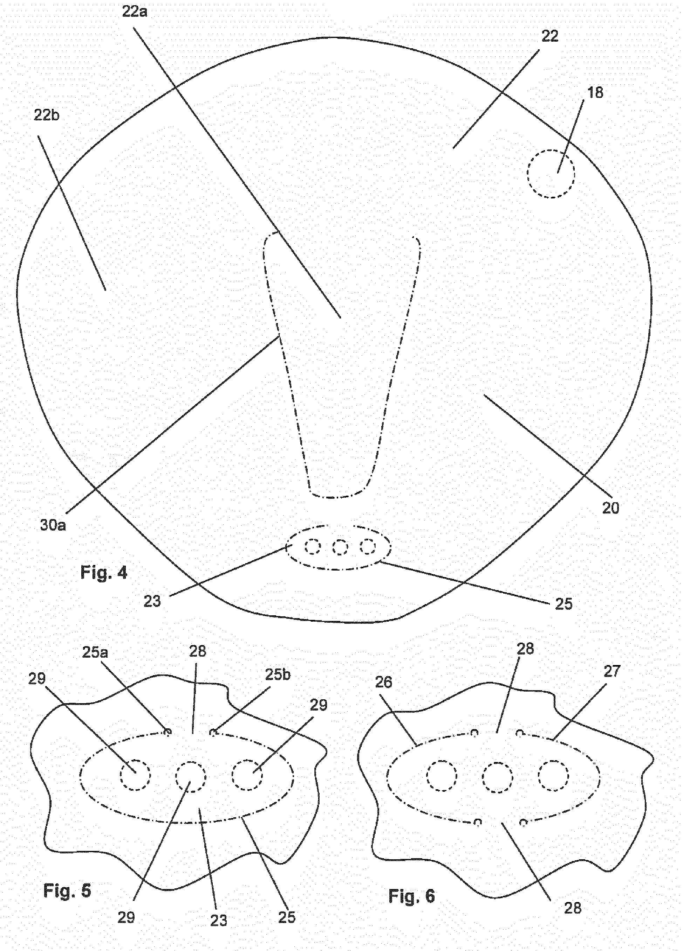

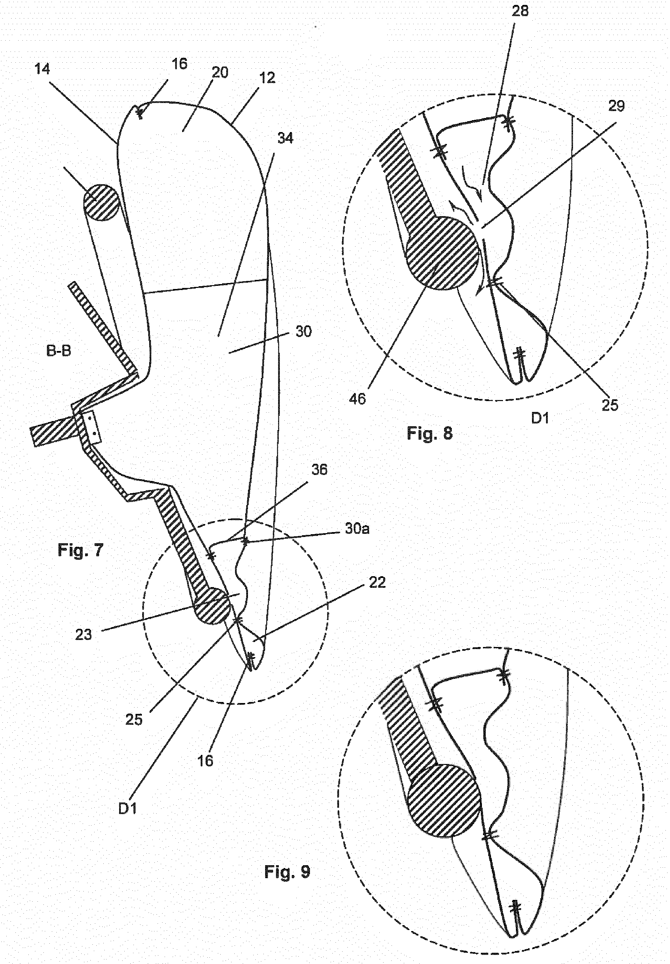

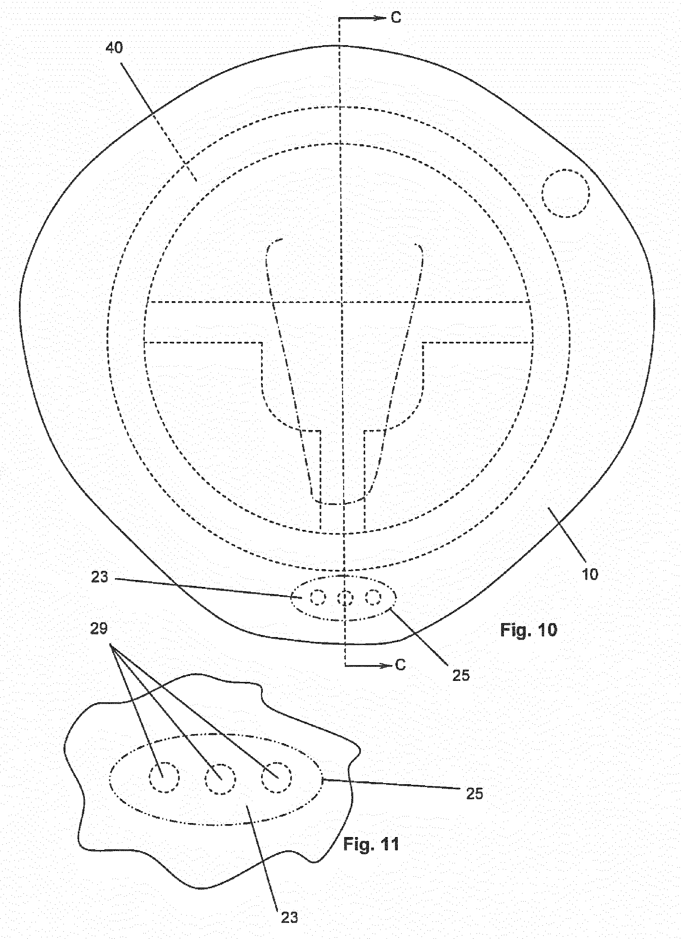

Figure 3 shows the driver airbag unit of Figure 1 in a state when the driver airbag 10 is fully deployed. Consequently the steering wheel 40 is completely covered by this driver airbag 10 such that its position is only shown in dashed lines. Since Figure 4 shows the driver airbag 10 of Figure 3, but without the steering wheel 40, Figure 5 shows a detail of Figure 4, Figure 7 shows the sectional view taken along line B-B in Figure 3 and Figures 8 and 9 show details of Figure 10 in different states, reference is made to all of these figures in the following.

The driver airbag 10 has a front layer 12 and a back layer 14 which are in form of two panels (or cuttings) in the embodiment shown. These two layers 12,14 are connected to each other by means of edge connection which is in form of an edge seam 16. The front layer 12 and the back layer 14 define the outer skin of the airbag which encloses a chamber 20. Since the edge seam 16 is on the inside of the driver airbag it is not shown in Figures 3 and 4. The back layer 14 comprises at least one main ventilation hole 18 as is shown in Figures 3 and 4.

Additionally to the edge seam 16 the front layer 12 and the back layer 14 are connected to each other as the follows:
In the centre area of the driver airbag 10 a U-shaped central tether 30 having (from the view-point of the driver) a left portion, a right portion and a middle portion. In Figures 3 and 4 only the seam 30a which connects this central tether 30 to the front layer 12 is shown. The sectional view of Figure 7 shows additionally the right portion 34 of this central tether 30 which is not cut by the plane of the sectional view and the middle portion 36 which is cut by the plane of this sectional view. By means of this central tether 30 the front layer 12 and the back layer 14 are of course not directly connected to each other, but this central tether defines the depth of the cushion of the driver airbag in the centre area. As can be seen from Figure 7, the height of this central tether 30 increases from its lower end to its upper end.

Additionally the front layer 12 and the back layer 14 are connected to each other by means of an inner connection in form of an inner seam 25 which is located at the six o'clock-position (when the steering wheel is in its forward driving direction) under the middle portion 36 of the central tether 30. The central tether 30 and the inner seam 25 are remote from each other, they are not in direct contact. As can best be seen from Figures 4 and 5, the inner seam 25 is basically oval-shaped, but not closed, such that it has a first open end 25a and a second open end 25b defining an overflow opening 28. The region encircled by the inner seam 25 is denoted as sub-chamber 23. So, the chamber 20 enclosed by the front layer 12 and the back layer 14 can be looked at as being comprised of a main chamber 20 and the sub-chamber 23 which is completely surrounded by the main chamber 22. "Completely surrounded" means here in the drawing plane, not perpendicular to the drawing plane. Further, the main chamber 22 can be looked at as comprising a central part 22a within the U of the central tether 30 and a peripheral part 22b outside the central tether 30.

As has already been mentioned, the sub-chamber 23 is in gas flow connection to the main chamber 22 by means of the overflow opening 28. The inner seam 25 is a permanent seam in a sense that under usual circumstances it is not destroyed during an accident even if the pressure inside the main chamber 22 increases rapidly. At least one additional ventilation hole 29 is provided in the back layer 14 inside the sub-chamber 23 that connects the sub-chamber 23 with the environment. In the embodiment shown three additional ventilation holes 29 are provided.

As can best be seen from Figure 3 the additional ventilation holes 29 and preferably at least the most of the sub-chamber 23 are placed in front of the rim 46 of the steering wheel 40 at the six o'clock-position of the steering wheel 40. So, when the driver airbag 10 is in its fully deployed state as is shown in Figure 7 and no force is applied to the area of the sub-chamber 23 (or near the area of the sub-chamber 23) gas can escape through the additional ventilation holes 29. This is usually the case when the driver is a rather small and light-weight person so in this case additional venting is provided making the driver airbag softer.

The more force is applied to or near the area of the sub-chamber 23 (for example because the driver is rather large and heavy) the more the back layer 14 around the ventilation holes 29 is pressed onto the rim 46 such that the gas flow through the additional ventilation holes 29 is throttled or even blocked.

With the first embodiment two effects are achieved. First, the depth of the cushion of the driver airbag 10 is very low (close to zero) at the six o'clock-position of the steering wheel taking away the load from the upper abdominal region of the driver. Since the cushion of the driver airbag has reasonable height left and right of this area (as can for example be seen from Figures 7 and 8) force is applied to the lower ribs instead of the upper abdominal region. Second, an adaptive ventilation with a degressive characteristic is achieved.

It is of course possible to provide more than one overflow opening 28 can be provided between the main chamber 22 and the sub-chamber 23. An example for this is shown in Figur 6. Here, the inner seam is comprised of two sections 26, 27.

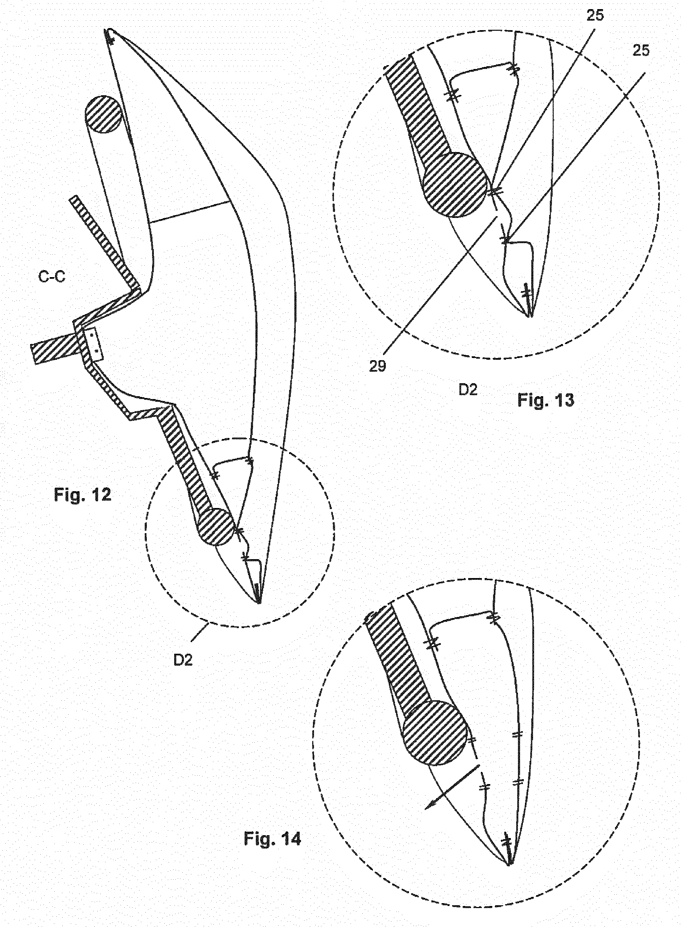

Figures 10 to 14 show an embodiment of the invention. The basic layout is as described above with the following differences: In the fully deployed state the sub-chamber 23 is still located at the six o'clock-position, but not in front, but a little under the rim of the steering wheel 40. Further, the inner connection (which is also in form of an inner seam 25) is designed as a tear connection (tear seam) which is destroyed when the pressure inside the main chamber 22 exceeds a pre-defined value. Since the edge seam 16 is supposed never to be destroyed, this inner seam 25 is weaker than the edge seam 16. Finally, the inner seam 25 is completely closed in its initial state such that the sub-chamber 23 has no connection to the main chamber 22.

The adaptivity characteristic is turned around in view of the first embodiment Here there is initially no additional venting by the additional ventilation holes 29, since there is no gas flow connection between the main chamber and the sub-chamber 23. But if the pressure inside the main chamber exceeds a pre-defined value, the inner seam 25 tears such that the sub-chamber 23 does not longer exist as a chamber separate from the main chamber 22 and gas can flow out of the main chamber 22 directly.

In the embodiments described in view of the figures, all connections are sewn connections, but this is not mandatory. It would also be possible to replace at least some of the sewn connections by other types of connections. Especially it would be possible to form the central tether one-piece-woven with at least one of the front layer or the back layer.

### List of reference numbers

- 10: driver airbag
- 12: front layer
- 14: back layer
- 16: edge seam
- 17: gas generator
- 18: main ventilation hole
- 20: chamber
- 22: main chamber
- 22a: central part of main chamber
- 22b: peripheral part of main chamber
- 23: sub-chamber
- 25: inner seam
- 25a: first open end
- 25b: second open end
- 26: first section
- 27: second section
- 28: overflow opening
- 29: ventilation hole
- 30: central tether
- 30a: seam of central tether
- 32: left portion
- 34: right portion
- 36: middle portion
- 40: steering wheel
- 42: hub area
- 44: steering column
- 46: rim
- 48: spoke

## Claims

1. Steering wheel unit comprising a steering wheel (40) having a hub area (42) and a rim (46) encircling the hub area (42), and a driver airbag (10) being located inside the hub area (42) of the steering wheel (40) as long as it is not deployed,
said driver airbag (10) comprising
a front layer (12) being located in front of the steering wheel (40) and pointing towards the driver when the driver airbag (10) is deployed and a back layer (14) pointing towards the steering wheel (40) when the driver airbag (10) is deployed, said front layer (12) and said back layer (14) being circumferentially connected to each other by an edge connection, said front layer (12) and back layer (14) defining a chamber (20), and
at least one ventilation hole (29) in the back layer (14),
**characterized**
**in that** the driver airbag further comprises:
- a line-shaped inner connection in form of an inner seam (25) connecting the front layer (12) and the back layer (14) in a lower area of the driver airbag (10), said inner connection being spaced from the edge connection and encircling at least partially a sub-chamber (23) of the chamber (20), such that the chamber (20) comprises a main chamber (22) and this sub-chamber (23) being completely surrounded by the main chamber (22),
wherein the inner connection has at least a first open end (25a) and a second open end (25b), such that the sub-chamber (23) is connected to the main chamber (22) via an overflow opening (28) extending between the first open end (25a) and the second open end (25b) of the inner connection, and **in that**
the sub-chamber (23) is in front of the rim (46) at the six o'clock-position when the steering wheel is in its straight-forward-driving position and **in that** the at least one ventilation hole connects the sub-chamber (23) with the environment.

2. Steering wheel unit according to claim 1, **characterized in that** the inner connection is a permanent connection.

3. Steering wheel unit according to claim 1, **characterized in that** the inner connection is a tear connection at least in sections.

4. Steering wheel unit according to claim 3, **characterized in that** the inner connection tears when the pressure inside the main chamber (22) exceeds a pre-defined value, while the edge connection remains intact.

5. Steering wheel unit according to one of the preceding claims, **characterized in that** the sub-chamber (23) is oblong-shaped with the long axis extending in a horizontal direction when the driver airbag (10) is mounted and deployed.

6. Steering wheel unit according to one of the preceding claims, **characterized in that** the front layer (12) and the back layer (14) are additionally connected to each other by means of at least one central tether (30).

7. Steering wheel unit according to claim 6, **characterized in that** the central tether (30) is U-shaped with the middle portion (36) of the U pointing towards the sub-chamber (23).

8. Steering wheel unit according to claim 6 or claim 7, **characterized in that** an area of the main chamber (22) extends between the central tether (30) and the inner connection.

## Patentansprüche

1. Lenkradeinheit, die ein Lenkrad (40) mit einem Nabenbereich (42) und einem den Nabenbereich (42) umschließenden Kranz (46) sowie einen Fahrerairbag (10) umfasst, der sich in dem Nabenbereich (42) des Lenkrads (40) befindet, solange er nicht entfaltet ist,
wobei der Fahrerairbag (10) Folgendes umfasst:
eine vordere Schicht (12), die sich vor dem Lenkrad (40) befindet und in Richtung des Fahrers zeigt, wenn der Fahrerairbag (10) entfaltet ist, und eine hintere Schicht (14), die in Richtung des Lenkrads (40) zeigt, wenn der Fahrerairbag (10) entfaltet ist, wobei die vordere Schicht (12) und die hintere Schicht (14) am Umfang miteinander über eine Randverbindung verbunden sind, wobei die vordere Schicht (12) und die hintere Schicht (14) eine Kammer (20) definieren, und mindestens ein Entlüftungsloch (29) in der hinteren Schicht (14),
**dadurch gekennzeichnet,**
**dass** der Fahrerairbag ferner Folgendes umfasst:
- eine linienförmige Innenverbindung in Form einer Innennaht (25), die die vordere Schicht (12) und die hintere Schicht (14) in einem unteren Bereich des Fahrerairbags (10) verbindet, wobei die Innenverbindung einen Abstand zur Randverbindung aufweist und zumindest teilweise eine Nebenkammer (23) der Kammer (20) derart umschließt, dass die Kammer (20) eine Hauptkammer (22) und diese vollständig von der Hauptkammer (22) eingefasste Nebenkammer (23) umfasst, wobei die Innenverbindung zumindest ein erstes offenes Ende (25a) und ein zweites offenes Ende (25b) aufweist, sodass die Nebenkammer (23) mit der Hauptkammer (22) über eine Überströmöffnung (28) verbunden ist, die zwischen dem ersten offenen Ende (25a) und dem zweiten offenen Ende (25b) der Innenverbindung verläuft,
und **dadurch, dass**
sich die Nebenkammer (23) vor dem Kranz (46) in der Sechs-Uhr-Stellung befindet, wenn sich das Lenkrad in seiner Geradeausfahrstellung befindet, und **dadurch, dass** das mindestens eine Entlüftungsloch die Nebenkammer (23) mit der Umgebung verbindet.

2. Lenkradeinheit nach Anspruch 1, **dadurch gekennzeichnet, dass** die Innenverbindung eine dauerhafte Verbindung ist.

3. Lenkradeinheit nach Anspruch 1, **dadurch gekennzeichnet, dass** die Innenverbindung zumindest abschnittsweise eine Aufreißverbindung ist.

4. Lenkradeinheit nach Anspruch 3, **dadurch gekennzeichnet, dass** die Innenverbindung aufreißt, wenn der Druck in der Hauptkammer (22) einen vordefinierten Wert übersteigt, während die Randverbindung unversehrt bleibt.

5. Lenkradeinheit nach einem der vorhergehenden Ansprüche, **dadurch gekennzeichnet, dass** die Nebenkammer (23) länglich geformt ist, wobei die Längsachse in einer waagerechten Richtung verläuft, wenn der Fahrerairbag (10) montiert und entfaltet ist.

6. Lenkradeinheit nach einem der vorhergehenden Ansprüche, **dadurch gekennzeichnet, dass** die vordere Schicht (12) und die hintere Schicht (14) über mindestens ein mittiges Halteband (30) zusätzlich miteinander verbunden sind.

7. Lenkradeinheit nach Anspruch 6, **dadurch gekennzeichnet, dass** das mittige Halteband (30) U-förmig ist, wobei der mittlere Abschnitt (36) des U in Richtung der Nebenkammer (23) zeigt.

8. Lenkradeinheit nach Anspruch 6 oder Anspruch 7, **dadurch gekennzeichnet, dass** ein Bereich der Hauptkammer (22) zwischen dem mittigen Halteband (30) und der Innenverbindung verläuft.

## Revendications

1. Unité de volant de direction comprenant un volant de direction (40) présentant une zone de moyeu (42) et une jante (46) encerclant la zone de moyeu (42), et un airbag conducteur (10) qui est situé dans la zone de moyeu (42) du volant de direction (40) tant qu'il n'est pas déployé,
ledit airbag conducteur (10) comprenant
une couche avant (12) située en face du volant de direction (40) et orientée vers le conducteur quand l'airbag conducteur (10) est déployé et une couche arrière (14) orientée vers le volant de direction (40) quand l'airbag conducteur (10) est déployé, ladite couche avant (12) et ladite couche arrière (14) étant reliées de manière circonférentielle l'une à l'autre par une liaison de bord, lesdites couche avant (12) et couche arrière (14) définissant une chambre (20), et
au moins un orifice d'évacuation d'air (29) dans la couche arrière (14), **caractérisé**
**en ce que** l'airbag conducteur comprend en outre :
- une liaison intérieure en forme de ligne sous la forme d'une couture intérieure (25) reliant la couche avant (12) et la couche arrière (14) dans une zone inférieure de l'airbag conducteur (10), ladite liaison intérieure étant espacée de la liaison de bord et encerclant au moins partiellement une sous-chambre (23) de la chambre (20), de telle sorte que la chambre (20) comprend une chambre principale (22) et cette sous-chambre (23) qui est complètement entourée par la chambre principale (22),
dans lequel la liaison intérieure présente au moins une première extrémité ouverte (25a) et une seconde extrémité ouverte (25b), de telle sorte que la sous-chambre (23) est reliée à la chambre principale (22) par le biais d'une ouverture de trop-plein (28) s'étendant entre la première extrémité ouverte (25a) et la seconde extrémité ouverte (25b) de la liaison intérieure,
et **en ce que**
la sous-chambre (23) est devant la jante (46) dans la position de six heures quand le volant de direction est dans sa position de conduite droit devant et **en ce que** l'au moins un orifice d'évacuation d'air relie la sous-chambre (23) à l'environnement.

2. Unité de volant de direction selon la revendication 1, **caractérisée en ce que** la liaison intérieure est une liaison permanente.

3. Unité de volant de direction selon la revendication 1, **caractérisée en ce que** la liaison intérieure est une liaison déchirable au moins sur certaines parties.

4. Unité de volant de direction selon la revendication 3, **caractérisée en ce que** la liaison intérieure se déchire quand la pression à l'intérieur de la chambre principale (22) dépasse une valeur prédéfinie, tandis que la liaison de bord reste intacte.

5. Unité de volant de direction selon l'une des revendications précédentes, **caractérisée en ce que** la sous-chambre (23) est de forme oblongue avec l'axe long s'étendant dans une direction horizontale quand l'airbag conducteur (10) est monté et déployé.

6. Unité de volant de direction selon l'une des revendications précédentes, **caractérisée en ce que** la couche avant (12) et la couche arrière (14) sont par ailleurs reliées l'une à l'autre au moyen d'au moins un élément d'attache central (30).

7. Unité de volant de direction selon la revendication 6, **caractérisée en ce que** l'élément d'attache central (30) est en forme de U avec une partie médiane (36) du U orientée vers la sous-chambre (23).

8. Unité de volant de direction selon la revendication 6 ou la revendication 7, **caractérisée en ce qu'**une zone de la chambre principale (22) s'étend entre l'élément d'attache central (30) et la liaison intérieure.
